# EUROPÄISCHE PATENTSCHRIFT

(11) **EP 0 999 888 B1**
(45) Veröffentlichungstag und Bekanntmachung des Hinweises auf die Patenterteilung: **04.06.2003**
(21) Anmeldenummer: 98942578.0
(22) Anmeldetag: 20.07.1998
(51) Int. Cl.: B01D 63/06, B01D 69/10, B01D 71/02

(54) **FILTERVORRICHTUNG**
FILTERING DEVICE
DISPOSITIF FILTRANT

(30) Priorität: 23.07.1997 DE 19731551
(43) Veröffentlichungstag der Anmeldung: 17.05.2000
(73) Patentinhaber: CeramTec AG Innovative Ceramic Engineering, 73207 Plochingen (DE)
(72) Erfinder: HEINL, Roland, D-95615 Marktredwitz (DE); SCHRÖTER, Peter, D-95632 Wunsiedel (DE)
(74) Vertreter: Scherzberg, Andreas, Dr.
(86) Internationale Anmeldenummer: EP9804506
(87) Internationale Veröffentlichungsnummer: WO99004889

(56) Entgegenhaltungen:
- EP-A- 0 686 424
- EP-A- 0 787 524
- WO-A-88/07398
- DE-C- 4 134 223

## Beschreibung

Die Erfindung betrifft eine Filtervorrichtung zum Filtern von flüssigen oder gasförmigen Medien.

Zum Filtern von flüssigen oder gasförmigen Medien sind Filterelemente bekannt, die in einem langgestreckten Trägerkörper aus grober Keramik mehrere in Längsrichtung verlaufende Kanäle aufweisen. Die Kanalwände sind mit einer Filtermembran aus feinporigem Material, beispielsweise feinporiger Keramik, bedeckt. Beim Durchströmen der Kanäle mit dem zu filternde Medium tritt das Filtrat (Permeat) durch die Filtermembran in den grobporigen Trägerkörper ein und an dessen Umfangsfläche aus.

Zur Erreichung einer hohen Leistungsfähigkeit und Wirtschaftlichkeit von Filtern muß die Filterfläche je Filterelement möglichst groß sein. Zur Vergrößerung der Filterfläche kann die Anzahl der längslaufenden Kanäle im Trägerkörper erhöht werden, indem die Querschnittsfläche der einzelnen Kanäle verkleinert wird. Die Viskosität des zu filternden Mediums setzt jedoch einer Verkleinerung der Querschnittsfläche der einzelnen Kanäle Grenzen.

Eine weitere Möglichkeit zur Vergrößerung der Filterfläche besteht darin, die Außenabmessungen des gesamten Filterelements zu vergrößern und in dem Filterelement eine größere Anzahl von Kanälen mit ausreichend großer Querschnittsfläche vorzusehen. Aufgrund der Vergrößerung der Außenabmessungen des Filterelements vergrößert sich aber auch der mittlere Abstand zwischen den einzelnen Kanälen und der Umfangsfläche des Filterelements. Durch die langen Diffusionswege und den dadurch erhöhten Druckverlust verringert sich der Druck des Filtrats im Trägerkörper von innen nach außen stark, wodurch die vorhandene Filterkapazität nur teilweise ausgeschöpft wird. Wegen der längeren Diffusionswege und dem erhöhten Druckverlust wird der Abtransport des Permeats behindert, wodurch die Permeatmenge sinkt. Zur Reinigung der Membranoberfläche ist in regelmäßigen Abständen ein Rückspülimpuls notwendig. Durch lange Diffusionswege und erhöhten Druckverlust ist die Abreinigung der weiter innen angeordneten Kanäle erschwert.

Aus DE 41 34 223 C1 ist ein langgestrecktes keramisches Filterelement mit längslaufenden Kanälen bekannt. Die Kanäle sind auf konzentrischen Kreisen angeordnet, wobei sich die zwischen den Kanälen verbleibende Wand keilförmig nach außen verbreitert. Die Querschnittsfläche der Kanäle nimmt von innen nach außen zu. Derartige Filterelemente können nicht beliebig groß hergestellt werden, weil mit zunehmender Größe auch die Länge der Diffusionswege des Filtrats und der Strömungswiderstand ansteigen. Dadurch ist die Filterwirkung bei innenliegenden Kanälen schlechter als bei weiter außen im Trägerkörper angeordneten Kanälen. Aus EP 0 310 632 B1 und WO 88 07 398 , auf welcher der Oberbegriff von Anspruch 1 basiert, ist ein einstückiges Filterelement mit längslaufenden Kanälen bekannt. Einige der längslaufenden Kanäle sind an den Stirnseiten des Filterelements verschlossen, so daß durch diese kein zu filterndes Medium strömt. Die stimseitig verschlossenen Kanäle sind über quer verlaufende Kanäle mit der Oberfläche des Filterelements verbunden. Das Filtrat kann in die stimseitig verschlossenen Kanäle eintreten und über die quer verlaufenden Kanäle abfließen. Das Verschließen einzelner längslaufender Kanäle ist aufwendig und die Herstellung von Querkanälen ist schwierig, da stets sichergestellt sein muß, daß eine Mindestwanddicke zwischen den Querkanälen und den längslaufenden Kanälen, durch die das zu filtemde Medium strömt, erhalten bleibt.

Aufgabe der Erfindung ist es, eine Filtervorrichtung mit großer Filterfläche zu schaffen, bei der kurze Diffusionswege und geringer Druckverlust realisiert sind.

Die Lösung der Aufgabe erfolgt erfindungsgemäß durch die Merkmale des Patentanspruchs 1.

Die erfindungsgemäße Filtervorrichtung ist in mehrere konzentrisch zueinander angeordnete Filterelemente mit längslaufenden Kanälen aufgeteilt. Die Filterelemente sind vorzugsweise ringförmig ausgebildet. Zwischen ihnen besteht jeweils ein radialer Abstand, so daß zwischen jeweils zwei Filterelementen ein umlaufender Ablaufkanal ausgebildet ist. Das Filtrat braucht in jedem Filterelement nur bis zu dessen Umfangsfläche vorzudringen und gelangt dann sogleich in einen Ablaufkanal, über den das Filtrat aus der Filtervorrichtung abgeleitet wird. Da der Filtratweg in jedem Filterelement gemessen an dem Querschnitt der gesamten Filtervorrichtung relativ klein ist, ergeben sich kurze Diffusionswege. Insbesondere sind die Längenunterschiede der einzelnen Diffusionswege gering, so daß die Filterwirkung über das Volumen der Filtervorrichtung gleichmäßig verteilt ist.

Vorzugsweise sind um ein inneres langgestrecktes Filterelement mehrere ringförmige Filterelemente konzentrisch zu dem inneren Filterelement angeordnet. Ist das innere Filterelement beispielsweise ein Zylinder, so sind um den Zylinder Filterelemente mit ringtörmigem Querschnitt angeordnet. Weist das innere Filterelement eine mehreckige Außenkontur auf, so können die das innere Filterelement umgebenden Filterelemente entsprechend ebenfalls mehreckig ausgebildet sein. Ebenso ist eine konzentrische Anordnung von Filterelementen mit unterschiedlichen Querschnitten möglich.

Erfindungsgemäß ist die Filtervorrichtung in mehrere Filterelemente unterteilt, wobei die Dicke der einzelnen Filterelemente gering ist, so daß kurze Diffusionswege realisiert sind. Dadurch kann der Druckverlust innerhalb des Trägerkörpers im Filtrat sehr klein gehalten werden. Die Kanäle können in dem Trägerkörper in geringem Abstand zueinander angeordnet werden. Da der Druck des Filtrats im Trägerkörper wegen der kurzen Diffusionswege über den gesamten Querschnitt annähernd konstant ist, ist die Filterwirkung bei jedem Kanal annähernd gleich.

Die erfindungsgemäße Filtervorrichtung weist eine große Filterfläche bei geringer Anzahl an Bauteilen auf. Dies wird erreicht, ohne die Diffusionswege zu verlängern und damit den Druckverlust zu erhöhen. Femer ist aufgrund der kurzen Diffusionswege die Rückspülbarkeit zur Reinigung der Filtermembranen verbessert.

Die Filterelemente 4 weisen Querkanäle auf, die radial von der Innenfläche zur Außenfläche des Filterelements verlaufen. Sofern drei oder mehr Filterelemente konzentrisch zueinander angeordnet sind, sind durch die Querkanäle die zwischen den Filterelementen vorgesehenen umlaufenden Ablaufkanäle miteinander verbunden. Dadurch findet zwischen den Ablaufkanälen ein Druckausgleich staff, so daß die Filterwirkung der erfindungsgemäßen Filtervorrichtung verbessert ist.

Durch das Vorsehen von Querkanälen in den Filterelementen können die Ablaufkanäle an beiden Stirnseiten geschlossen sein, so daß das Filtrat ausschließlich über die Außenfläche und die Querkanäle des äußersten Filterelements abfließt. Da die durch die Querkanäle der Filterelemente fließende Filtratmenge zunimmt, je weiter außen ein Filterelement angeordnet ist, sollte die Anzahl der Querkanäle eines Filterelements jeweils größer sein als die Anzahl der Querkanäle des nächstinneren Filterelements. Die Summe der Querschnittsflächen der Querkanäle eines Filterelements sind jeden falls größer als die Summe der Querschnittsflächen der Querkanäle des nächstinneren Filterelements.

Da die erfindungsgemäße Filtervorrichtung aus mehreren einzelnen Filterelementen zusammengesetzt ist, ist die Herstellung stark erleichtert.

Die Filterelemente können aus Kunststoff oder Sintermetall bestehen. Vorzugsweise sind sie aus Keramik hergestellt.

Nachfolgend wird die Erfindung anhand einer bevorzugten Ausführungsform unter Bezugnahme auf die anliegenden Zeichnungen näher erläutert

Es zeigen:
- Fig. 1: einen schematischen Querschnitt des zentralen Filterelements einer Filtervorrichtung und
- Fig. 2: einen schematischen Querschnitt einer das Filterelement nach Fig. 1 enthaltenden Filtervorrichtung.

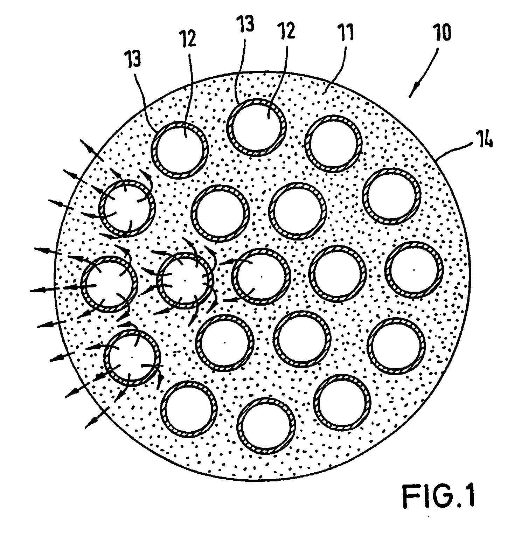

Das in Fig. 1 dargestellte stabförmige zylindrische Filterelement 10 erstreckt sich senkrecht zur Zeichenebene und weist über die gesamte Länge den gleichen Querschnitt auf. Das Filterelement 10 weist einen Trägerkörper 11 aus grobporiger Keramik (Aluminiumoxid) auf. In dem Trägerkörper 11 sind mehrere längslaufende Kanäle 12 angeordnet, die sich in Längsrichtung durch das gesamte Filterelement erstrecken. Die Kanäle 12 sind auf konzentrisch zueinander angeordneten Kreisen angeordnet, wobei auf allen Kreisen die Abstände zwischen benachbarten Kanälen jeweils gleich sind. Die Kanalwände der Kanäle 12 sind jeweils über ihre gesamte Länge mit einer Filtermembran 13 bedeckt. Die Filtermembran 13 besteht aus feinporigem Material, beispielsweise feinporiger Keramik, wie z. B. Aluminiumoxid, Zirkonoxid oder Titanoxid.

Zum Filtern von flüssigen oder gasförmigen Medien strömt das Medium durch die Kanäle 12. Aufgrund des in den Kanälen 12 herrschenden Drucks wird das Filtrat durch die Filtermembran 13 aus den Kanälen 12 in radialer Richtung in den Trägerkörper 11 gedrückt. Das Filtrat strömt in dem Trägerkörper 11 in Richtung der Pfeile zur Oberfläche 14 des Trägerkörpers 11. An der OberFläche 14 des Trägerkörpers 11 tritt das Filtrat radial in Richtung der Pfeile aus.

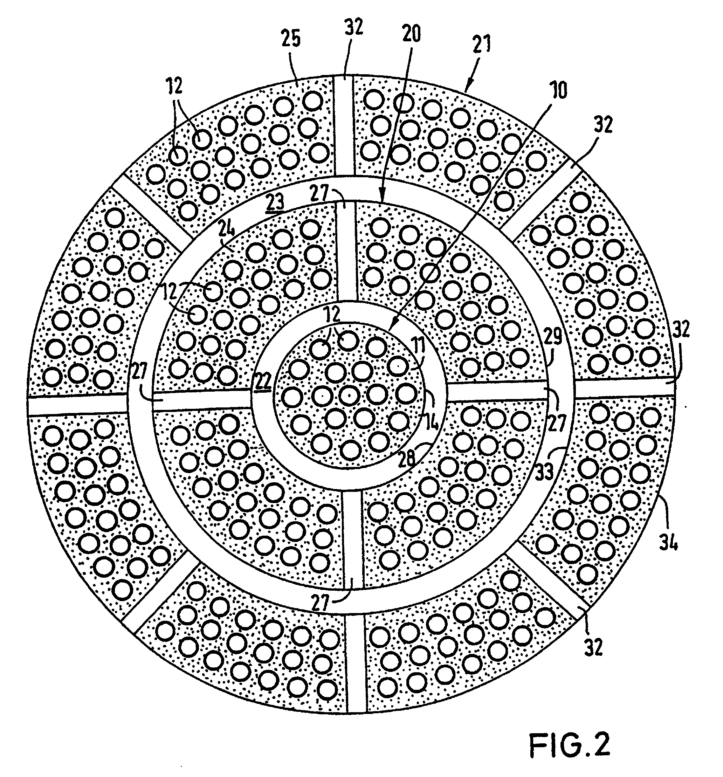

Das in Fig.1 dargestellte Filterelement 10 ist das zentrale Filterelement der in Fig. 2 dargestellten Filtervorrichtung. Um das zylindrische Filterelement 10 sind kreiszylinderförmige einstückige Filterelemente 20,21 angeordnet. Das Filterelement 20 ist konzentrisch zu dem in Fig. 1 beschriebenen Filterelement 10 angeordnet, so daß zwischen dem Filterelement 10 und dem Filterelement 20 ein ringförmiger Ablaufkanal 22 ausgebildet ist. Entsprechend ist zwischen den beiden kreiszylinderförmigen Filterelementen 20 und 21 ein weiterer Ablaufkanal 23 ausgebildet, da der Außendurchmesser des Filterelements 20 kleiner als der Innendurchmesser des Filterelements 21 ist und die beiden Filterelemente 20,21 zueinander konzentrisch angeordnet sind. Zur Versteifung der Filtervorrichtung können in den Abflußkanälen 22,23 zwischen den Filterelementen 10,20,21 Abstützungen vorgesehen sein.

Die stabförmigen Filterelemente 20,21 weisen entsprechend dem zylindrischen Filterelement 10 jeweils einen Trägerkörper 24,25 aus grobporiger Keramik auf, in dem in Längsrichtung Kanäle 12 parallel zueinander angeordnet sind. Sämtliche Filterelemente 10,20,21 sind Profilkörper, die über die gesamte Länge den gleichen Querschnitt aufweisen. Die Kanalwände der Kanäle 12 sind entsprechend den in Fig. 1 beschriebenen Kanälen 12 mit einer Filtermembran 13 bedeckt, die in Fig. 2 nicht dargestellt ist. Die Kanäle 12 der Filterelemente 20,21 sind, ebenso wie bei dem Filterelement 10, auf zueinander konzentrischen Kreisen in konstantem Abstand zueinander angeordnet. In beiden Filterelementen 20,21 sind Kanäle 12 über den gesamten Querschnitt in konstantem Abstand zueinander angeordnet In der Fig. 2 dargestellten Ausführungsform weisen die Filterelemente 20,21 in radialer Richtung drei nebeneinander angeordnete Kanäle 12 auf. Durch die Anzahl der radial nebeneinander angeordneten Kanäle wird die Dicke der Filterelemente 20,21 bestimmt. Zur Erzielung einer guten Filterwirkung sind je Filterelement 20,21 ein bis neun, vorzugsweise drei bis fünf Kanäle radial nebeneinander angeordnet.

Das Fitterelement 20 weist radial verlaufende Querkanäle 27 auf. Die Querkanäle 27 erstrecken sich von der Innenfläche 28 des Filterelements 20 zu dessen Außenfläche 29 und verbinden den ringförmigen Ablaufkanal 22 mit dem ringförmigen Ablaufkanal 23. Die Querkanäle 27 sind als radiale Bohrungen oder Schlitze ausgebildet, so daß die einstückige Form des Filterelements 20 erhalten bleibt

Das Filterelement 21 weist ebenfalls Querkanäle 32 auf, die entsprechend der Querkanäle 27 des Filterelements 20 ausgebildet sind und sich ebenfalls in radialer Richtung von einer Innenfläche 33 in Richtung einer Außenfläche 34 des Filterelements 21 erstrecken. Die Querkanäle 32 verbinden den ringförmigen Ablaufkanal 23 mit der Oberfläche 34 des Filterelements 21. Sofern um das Filterelement 21 weitere Filterelemente angeordnet sind, verbinden die Kanäle 32 den ringförmigen Ablaufkanal 23 mit einem um das Filterelement 21 angeordneten Ablaufkanal. Die Breite der Querkanäle 27,32 entspricht vorzugsweise mindestens dem Durchmesser der Kanäle 12.

Das Filtrat des durch die Kanäle 12 der Filterelemente 10,20,21 strömenden Mediums tritt durch die Filtermembranen in die Trägerkörper 11,24,25 der Filterelemente 10,20,21 ein. Aus dem Trägerkörper 11 des Filterelements 10 tritt das Filtrat an dessen Oberfläche 14 aus und gelangt somit in den Ablaufkanal 22. Aus den Trägerkörpern 24,25 der Filterelemente 20,21 tritt das Filtrat jeweils sowohl an den Innenflächen 28,33 als auch an den Außenflächen 29,34 der Filterelemente 20,21 aus. Der Diffusionsweg des Filtrats beträgt somit bei den Filterelementen 20,21 maximal die Hälfte der Dicke der ringzylinderförmigen Filterelemente 20,21. Bei dem zylindrischen Filterelement 10 entspricht der maximale Diffusionsweg dem Radius des Filterelements 10.

Das aus den Filterelementen 10,20,21 in die Ablaufkanäle 22,23 gelangende Filtrat tritt beispielsweise durch die Querkanäle 27,32 aus. Beim Filtern eines Mediums im Durchlaufverfahren sind vorzugsweise beide Stirnseiten der Ablaufkanäle verschlossen, um das Zuführen und Abführen von zu filtemdem Medium zu bzw. von den Kanälen 12 zu erleichtern. Hierzu werden die Stirnseiten der Filterelemente 10,20,21 beispielsweise in Epoxidharz oder Polyurethan eingegossen oder in einem entsprechend ausgebildeten Gehäuse eingespannt, so daß die Ablaufkanäle 22,23 an ihren Stimseiten verschlossen sind. Das Filtrat strömt sodann aus dem Ablaufkanal 22 durch die Querkanäle 27 in den Ablaufkanal 23 und aus diesem durch die Querkanäle 32 des Filterelements 21 zur Oberfläche 34 des Filterelements 21. Die gesamte Filtratmenge tritt somit an der Oberfläche 34 und durch die Kanäle 32 des Filterelements 21 aus der Filtervorrichtung aus. Um das Filterelement 21 kann als Auffangvorrichtung für das Filtrat beispielsweise ein konzentrisches Rohr vorgesehen sein, aus dem das Filtrat abgeleitet wird.

Ebenso kann die der Zuleitung des Mediums gegenüberliegende Stirnseite völlig verschlossen sein, so daß die Ablaufkanäle 22,23 und die Filterelemente 10,20,21 einseitig verschlossen sind und kein ungefiltertes Medium aus der Filtervorrichtung abgeleitet wird. Bei dieser Anwendung verbleiben in den Kanälen 12 die ausgefilterten Feststoffe. Sobald die Permeatmenge unter einen Schwellwert sinkt, werden die Kanäle 12 beispielsweise mittels einer Reinigungsflüssigkeit rückgespült

## Patentansprüche

1. Filtervorrichtung zum Filtern von flüssigen oder gasförmigen Medien, mit Filterelementen (20,21), die jeweils in einem grobporigen Trägerkörper (24,25) mehrere längslaufende Kanäle (12) aufweisen, durch die ungefiltertes Medium strömt und die feinporige, die Kanalwände bedeckende Filtermembranen (13) aufweisen, so dass ein Filtrat des die Kanäle (12) durchströmenden Mediums durch die Filtermembranen (13) in den grobporigen Trägerkörper (24, 25) eintritt und an dessen Umfangsflächen (28,29, 33,34) austritt,
**dadurch gekennzeichnet,**
**dass** mehrere Filterelemente (20,21) konzentrisch zueinander angeordnet und durch umlaufende Ablaufkanäle (22,23) getrennt sind, dass jedes Filterelement (20,21) zumindest einen Querkanal (27,32) aufweist, der von einer zur Mitte der konzentrischen Anordnung gerichteten Innenfläche (28,33) zu einer gegenüberliegenden Außenfläche (29,34) des Filterelements (20,21) verläuft, wobei die Summe der Querschnittsflächen der Querkanäle (32) eines Filterelements (21) größer ist als die Summe der Querschnittsflächen der Querkanäle (27) des nächstinneren Filterelements (20).

2. Filtervorrichtung nach Anspruch 1, **dadurch gekennzeichnet, dass** die Anzahl der Querkanäle (32) eines Filterelements (21) größer ist als die Anzahl der Querkanäle (27) des nächstinneren Filterelements (20).

3. Filtervorrichtung nach Anspruch 1 oder 2, **dadurch gekennzeichnet, dass** ein zentrales Filterelement (10) ohne Querkanäle vorgesehen ist und die das zentrale Filterelement (10) konzentrisch umgebenden Filterelemente (20,21) jeweils einen kreisringförmigen Querschnitt aufweisen.

4. Filtervorrichtung nach einem der Ansprüche 1 bis 3, **dadurch gekennzeichnet, dass** die Ablaufkanäle (22,23) an beiden Stirnseiten geschlossen sind, so daß das Filtrat aus den Ablaufkanälen (22,23) über die Querkanäle (27,32) der Filterelemente (20,21) zur Außenfläche (34) des äußersten Filterelements (21) abfließt.

5. Filtervorrichtung nach einem der vorhergehenden Ansprüche, **dadurch gekennzeichnet, dass** innerhalb der Wandstärke in Längsrichtung der Filterelemente (10,21) ein bis neun, vorzugsweise drei bis fünf längslaufende Kanäle (12) radial nebeneinander angeordnet sind.

6. Filtervorrichtung nach einem der vorhergehenden Ansprüche, **dadurch gekennzeichnet, dass** die Filterelemente (10,20,21) zur Fixierung stimseitig vorzugsweise in Epoxidharz oder Polyurethan eingegossen sind.

7. Filtervorrichtung nach einem der vorhergehenden Ansprüche, **dadurch gekennzeichnet, dass** die Filterelemente (10,20,21) aus grobporiger Keramik hergestellt sind.

## Claims

1. Filter device for filtering liquid or gaseous media, comprising filter elements (20, 21) which each comprise a plurality of longitudinal channels (12) in a macroporous carrier body (24, 25), through which channels unfiltered medium flows, and which comprise microporous filter membranes (13) covering the channel walls, so that a filtrate of the medium flowing through the channels (12) enters the macroporous carrier body (24, 25) through the filter membranes (13) and exits at the peripheral faces (28, 29, 33, 34) of the carrier body, **characterised in that** a plurality of filter elements (20, 21) are arranged concentrically to one another and are separated by circumferential discharge channels (22, 23), **in that** each filter element (20, 21) has at least one transverse channel (27, 32) extending from an inner face (28, 33) oriented toward the centre of the concentric arrangement to an opposing outer face (29, 34) of the filter element (20, 21), the sum of the cross-sectional areas of the transverse channels (32) of a filter element (21) being greater than the sum of the cross-sectional areas of the transverse channels (27) of the next-inner filter element (20).

2. Filter device according to claim 1, **characterised in that** the number of transverse channels (32) of a filter element (21) is greater than the number of transverse channels (27) of the next-inner filter element (20).

3. Filter device according to claim 1 or 2, **characterised in that** a central filter element (10) without transverse channels is provided and the filter elements (20, 21) concentrically surrounding the central filter element (10) each have an annular cross-section.

4. Filter device according to one of claims 1 to 3, **characterised in that** the discharge channels (22, 23) are closed at both end faces, so the filtrate discharges from the discharge channels (22, 23) via the transverse channels (27, 32) of the filter elements (20, 21) to the outer face (34) of the outermost filter element (21).

5. Filter device according to one of the preceding claims, **characterised in that** one to nine, preferably three to five, longitudinal channels (12) are arranged radially side by side within the wall thickness in the longitudinal direction of the filter elements (10, 21).

6. Filter device according to one of the preceding claims, **characterised in that** the filter elements (10, 20, 21) are preferably cast in epoxy resin or polyurethane for fixing at the end face.

7. Filter device according to one of the preceding claims, **characterised in that** the filter elements (10, 20, 21) are produced from macroporous ceramic.

## Revendications

1. Système de filtre pour filtrer des produits liquides ou gazeux, avec des éléments filtrants (20, 21) qui présentent chacun, dans un corps-support (24, 25) à larges pores, plusieurs canaux (12) longitudinaux dans lesquels s'écoule du liquide non filtré et qui présentent des membranes filtrantes (13) à pores fins, couvrant les parois de canaux, de telle sorte qu'un filtrat du produit circulant dans les canaux (12) et pénètre dans le corps-support (24, 25) à larges pores au travers des membranes filtrantes (13) et sorte au niveau des surfaces périphériques de celui-ci,
**caractérisé**
**en ce que** plusieurs éléments filtrants (20, 21) sont disposés concentriquement les uns avec les autres et sont séparés par des canaux de sortie (22, 23) circulaires, en ce que chaque élément filtrant (20, 21) présente au moins un canal transversal (27, 32) qui s'étend entre une surface intérieure (28, 33), tournée vers le centre de l'agencement concentrique, et une surface extérieure (29, 34) en vis-à-vis, de l'élément filtrant (20, 31), la somme des surfaces en section transversale des canaux transversaux (32) d'un élément filtrant (21) étant supérieure à la somme des sections transversales des canaux transversaux (27) de l'élément filtrant (20) le plus proche en direction de l'intérieur.

2. Système de filtre selon la revendication 1, **caractérisé en ce que** le nombre des canaux transversaux (32) d'un élément filtrant (21) est supérieur au nombre de canaux transversaux (27) de l'élément filtrant (20) le plus proche en direction de l'intérieur.

3. Système de filtre selon la revendication 1 ou 2, **caractérisé en ce qu'**il est prévu un élément filtrant central (10) sans canaux transversaux et **en ce que** les éléments filtrants (20, 21) qui entourent de manière concentrique ledit élément filtrant (10) central présentent une section transversale annulaire.

4. Système de filtre selon une des revendications 1 à 3,
**caractérisé en ce que** les canaux de sortie (22, 23) sont fermés au deux extrémités frontales, de telle sorte que le filtrat s'écoule des canaux de sortie (22, 23), à travers les canaux transversaux (27, 32) des éléments filtrants (20, 21), vers la surface extérieure (34) de l'élément filtrant (21) situés le plus à l'extérieur.

5. Système de filtre selon une des revendications précédentes,
**caractérisé en ce que** dans l'épaisseur de la paroi, dans la direction longitudinale des éléments filtrants (10, 21), de un à neuf, de préférence de trois à cinq canaux longitudinaux (12) sont disposés côte à côte dans la direction radiale.

6. Système de filtre selon une des revendications précédentes,
**caractérisé en ce que** les éléments filtrants (10, 20, 21), à des fins de fixation, sont noyés côté frontal dans de la résine époxy ou polyuréthane.

7. Système de filtre selon une des revendications précédentes,
**caractérisé en ce que** les éléments filtrants (10, 20, 21) sont réalisés en céramique à larges pores.
